# EUROPEAN PATENT APPLICATION

(11) **EP 3 470 983 A1**
(43) Date of publication of application: **17.04.2019**
(21) Application number: 17195726.9
(22) Date of filing: 10.10.2017
(51) Int. Cl.: G06F 9/50

(54) **METHOD, SYSTEM AND COMPUTER READABLE MEDIUM TO ALLOCATE RESOURCES TO AT LEAST ONE APPLICATION**

(71) Applicant: Nokia Solutions and Networks Oy, 02610 Espoo (FI)
(72) Inventor: LATIF, Imran, 91300 Massy (FR); AKLAMANU, Fred, 91300 Massy (FR); RANDRIAMASY, Sabine, 92190 Meudon (FR)
(74) Representative: Nokia EPO representatives

(57) **Abstract**

Method, system and computer readable medium, to allocate resources to at least one application. This application is constituted of a set of functions and connection means allowing communication between the functions. These resources are constituted of computing resources and communication resources. The computing resources is used by the functions and the communication resources are the connection means. The method comprises a step of receiving a request for allocating resources to the application, the request comprising a requested time slot for these resources and a step of determining if resources can be allocated to the application during the requested time slot and a step, if resources are available, of allocating, during the requested time slot, computing resources to the functions, and communication resources to the connection means.

## Description

### FIELD OF INVENTION

The present subject matter relates to a method to allocate resources to an application, map the applications on these resources and to execute this application. By resources, we mean computing resources (CPU and/or memory) used to execute the application and network resources used to allow the communication needs of the different functions of the application.

### BACKGROUND

The application business is expanding very fast. This expansion leads to several difficulties regarding the network infrastructure operation. Especially regarding the management of network and computation resources to make "Over The Top" (OTT) applications easily manageable.

Service providers want to offer on-the-fly OTT services such as mobile and fixed broadband video download, massive industrial Internet of the Things (IoT) or ephemeral radio access networks, all deployed in a given region and time period. Setting up an OTT application slice currently, requires hours of numerous and tedious expert-level operations following the "*imperative model".*

Using the object of the present subject matter, an intent-based slicing of cloud and network can be implemented without the need the hours of numerous and tedious expert-level operations. The present subject matters present also numerous other advantages that will be described within the following parts of this disclosure.

### SUMMARY

This summary is provided to introduce concepts related to methods to allocate resources to an application.

In one implementation, a method, to allocate resources to at least one application, is described. This application is constituted of a set of functions and connection means allowing communication between the functions. These resources are constituted of computing resources and communication resources. The computing resources is used by the functions and the communication resources are the connection means. The method comprises a step of receiving a request for allocating resources to the application, the request comprising a requested time slot for these resources and a step of determining if resources can be allocated to the application during the requested time slot and a step, if resources are available, of allocating, during the requested time slot, computing resources to the functions, and communication resources to the connection means.

In another implementation, a system is described. This system is designed to allocate resources to at least one application. This application is constituted of a set of functions and connection means allowing communication between the functions. These resources are constituted of computing resources and communication resources. The computing resources are used by the functions and the communication resources are the connection means. The system comprises a module configured to receive a request for allocating resources to the application, the request comprising a requested time slot for these resources and a module configured to determine if resources can be allocated to the application during the requested time slot and a module configured to allocate, if resources are available, during the requested time slot, computing resources to the functions, and communication resources to the connection means.

In another implementation, a computer-readable medium is described. This computer-readable medium has embodied thereon a computer program configured to realize a method to allocate resources to at least one application. This application is constituted of a set of functions and connection means allowing communication between the functions. These resources are constituted of computing resources and communication resources. The computing resources are used by the functions and the communication resources are the connection means. The method comprises a step of receiving a request for allocating resources to the application, the request comprising a requested time slot for these resources and a step of determining if resources can be allocated to the application during the requested time slot and a step, if resources are available, of allocating, during the requested time slot, computing resources to the functions, and communication resources to the connection means.

### BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of systems and/or methods in accordance with embodiments of the present subject matter are now described, by way of example only, and with reference to the accompanying figures, in which:
Figure 1 presents a first embodiment of the method of the present subject matter.
Figure 2 presents a second embodiment of the method of the present subject matter.
Figure 3 presents a third embodiment of the method of the present subject matter.
Figure 4 presents an embodiment of a system object of the present subject matter.
Figure 5 & 6 present two other embodiments of the system object of the present subject matter.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

Intent-based networking (IBN) is an approach to allow easy configuration of a network. IBN consists in organizing and wrapping sets of complex network management and configuration instructions, to expose them to network users in the form of a simple and unambiguous service request called "Intent". An "Intent" expresses *what* service is requested while leaving the *how* to deploy it to the network management. An example Intent expression may be "Set-up an application slice for video download, on April 10th from 5:00 to 10:00", quality class = High Definition (HD), coverage zone = Saclay, Nozay, Orsay" and leaves the deployment complexity to the Cloud provider. Another example Intent is: "Connect Host A and Host B" and leaves the "via which path", to the network management.

Network slicing consists in providing applications with a dedicated set of computation, storage and network resources called a *slice.* These resources will be dedicated to the communication exchange of the application. It also based on Cloud networking, and involves, like networking in general, an increased part of Network Function Virtualization (NFV) controlled by orchestrators and Software Defined Networking controlled by SDN Controllers (SDN-C).

In the following parts of this divulgation the following definition will be used:
- "network users" in this divulgation covers network operations engineers wanting simplicity and robustness as well as their customers, tenants or applications, wanting simple and reliable access to network connectivity services and computation resources.
- "service" covers an application that has been set-up upon network user request and can designate a connectivity service (network service) or an OTT application (slice service). Sometimes also called "slice".
- Cloud OTT Application Slicing Platform: refers to virtual functions deployed in one or several clouds and managed by an orchestrator to perform services. The orchestrator can possibly call a SDN Controller when network connectivity needs to be managed for this application. The SDN Controller of the platform can also be called alone whenever connectivity needs to be established or updated.

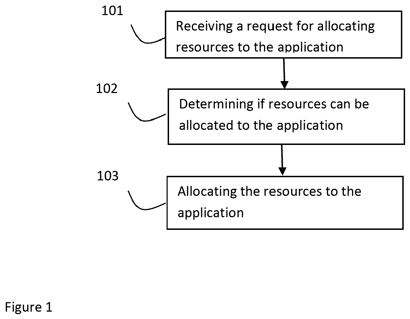

Figure 1 presents a first embodiment of the method of the present subject matter. The aim of this method is the allocation of resources to at least one application. This application is constituted of a set of functions and connection means allowing communication between the functions. These resources are constituted of computing resources and communication resources. The computing resources are used by the functions and the communication resources are used by the connection means. The method comprises:
- a step 101 of receiving a request for allocating resources to the application, the request comprising a requested time slot for these resources and
- a step 102 of determining if resources can be allocated to the application during the requested time slot and
- a step 103, executed if resources are available, of allocating, during the requested time slot, computing resources to the functions, and communication resources to the connection means.

In an embodiment, the functions are virtual functions.

In an embodiment, the connection means are configured via flow rules, these flow rules are sent to the virtual switches to specify the forwarding rules of an end to end application path. When a packet enters a switch (real or virtual), these rules define its next hop, based on information such as ingress port or packet destination. These flow rules can be sent for example by a controller.

In other words, within the step 103 of allocating resources, the resources are assigned to applications. In some embodiments, the implementation of this allocation step is split between two elements. One is the Intent Based Application Slicing IBAS and the other is the Cloud OTT Application Slicing Platform COASP. In this embodiment, the IBAS tells the COASP what virtual functions to deploy and how much resources are needed. The IBAS can measure the CPU and memory (RAM) consumption for a set of the virtual functions used to run the application. A certain amount of CPU cores and RAM can be implicitly assigned to a virtual function and the COASP knows it. The COASP will adapt its resources according to the IBAS indications. In further versions, the IBAS may be able to tell how much virtual functions can be deployed on a given number of CPU cores and a given number of RAM units. IBAS can also know how much network resources are needed by a given number of virtual functions. When dealing with IBAS a virtual function is a part of an application. It runs on an equipment and can be replicated and deployed on an equipment of a data center. Within IBAS, resources allocation to an application consists in specifying, for a requested application slice (virtual function associated with the application), the amount of connectivity and computing resources needed to run this application. The IBAS specifies this amount of resources together with the virtual functions used to run the application and sends this to the COASP.

Within the implementation of this method between an IBAS and a COASP. Setting-up an application requires the deployment of related virtual functions and connection means between these virtual functions. In the present divulgation, the functions, connection means and associated resources that are allocated to run an application and support at least one flow for this application are called an "Application Slice". The IBAS specifies two sets of functions and asks the orchestrator to deploy them.
- A first set comprising the virtual functions involved in the connectivity set-up. For instance, functions such as "Cell", "Scheduler'", "Local resources'".
- A second set comprising the virtual functions involved in the connectivity. For example: "IoT slice packet processing", "video slice packet processing".

A sequence of virtual functions must then be defined to execute the application. That is an ordered list of functions that successively handle a packet of an application flow traversing the COASP.

For example, an IoT application packet will be successively handled by: "PhyCell", xUPIoT".

In the case of an application realized by more than one function or virtual function, we will call application path, the sequence of virtual hops in terms of functions or virtual functions and network elements, that a packet of data, treated by the application will traverse to be processed and so for the application to be realized.

If the allocation of the resources is not feasible, the step 103 of allocating the resources, and the other steps of the other embodiments are not realized. Furthermore, in an embodiment, the requestor of the resources is notified of this unavailability.

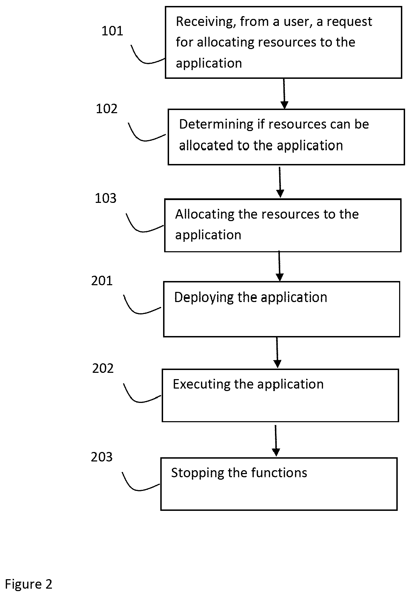

In a second embodiment, presented figure 2, the method also comprises:
- a step 201 of deploying the functions and connection means for the communication of the functions, based on the allocated computing and communication resources,
- a step 202 of executing the application, during the requested time slot and
- a step 203 of stopping the functions and releasing the allocated computing and communication resources once the requested time slot is elapsed.

The methods previously described have the following advantages:
- The support of calendaring functionalities, that allow the applications to start and stop at a chosen time.
- The method avoids wasting time trying to allocate resources that are not allocable.

Within another embodiment of the present subject matter, the computing resources comprise CPU resources and memory resources. In this embodiment by network resources, we mean an allocated network link(s) dedicated to the communication needs of this application. The performance of this dedicated network link(s) will depend on the needs of the application and will be expressed in the form of a given throughput, most of the time expressed in bit/s, and other metrics such as transmission delay or packet loss.

Within another embodiment of the present subject matter, the request also comprises at least one of:
- name of the requested service,
- start time,
- duration,
- applicable geographical region,
- quality class.

As an example, these different parameters can take the following values:
- name of the requested service: video streaming, gaming, IoT-host-to-server, IoT host-to-host, others
- start time: day/month/year - hour:minute:second - local time: 06/10/2017 13:15:00 local time
- duration: hour:minute:second - 02:30:00
- applicable geographical region: can be selected on a map or in a menu
- quality class: real-time, no-latency, no-loss, high definition, others

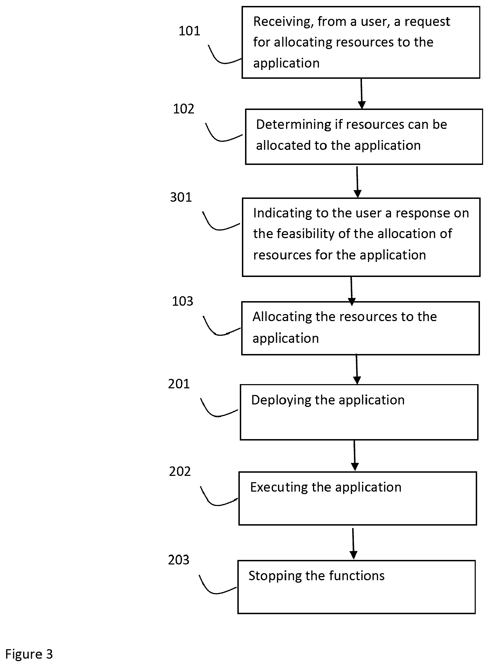

The figure 3 presents a second embodiment of the method to execute an application. In this embodiment, and compared to the first embodiment, the request for allocating resources to the application is received from a user. Furthermore, within this embodiment, the method also comprises, after the step 102 of determining if resources can be allocated, a step 301 of indicating to the user a response on the feasibility of the allocation of resources for the application.

In an embodiment, this indication can be realized via the user interface of a computer used to realize part of this method.

In another embodiment, the method also comprises a step of storing parameters of the request for allocating resource and information regarding this allocated resources. In other words, within this embodiment, we store the type and parameters of an application slice in a database mapping it to sequences of cloud execution and combining identification of involved virtual functions, call to orchestration and connectivity set-up.

In other words, the present subject matter is related to Application Slicing Intents (ASIs). In the rest of the document, ASIs may also be named "Intents'". ASIs additionally support OTT applications as well as connections dedicated to the communication of these applications, or connections requested as an OTT service. ASIs are additionally defined in time and space. For example, these OTT applications can be video streaming or IoT. In some part of this divulgation, the methods presently described are also called Intent Based Application Slicing (IBAS). The methods described within this divulgation will supervise VNF (Virtual Network Function) orchestrator and SDN (Software Define Network) controller. This VNF orchestrator and SDN controller are in a so-called Cloud OTT Application Slicing Platform (COASP).

The methods previously described are configured to perform:
- Abstraction of long sequences of cloud and network operation sequences into common language technology-agnostic commands, called "Application Slicing Intents",
   o Modular organization of operations sequences mapped with ASIs and their storage in a database
- Support for the network user to express an application slicing intent via a user-friendly interface,
- Reverse mapping of Slicing Intents to cloud and network operation sequences
   o Where these operations are sequenced until the top-level functions of a COASP is reached
   o Where the top-level functions of a COASP comprise at least an orchestrator, a SDN orchestrator, a VNF Overlay connector,
- Calendaring, cancellation, and interruption of ASIs,
- Cloud and Network Resources dimensioning for ASIs w.r.t. Network Bandwidth, CPU, Memory
- Resources availability verification for ASIs,
- User notification of acceptance or rejection of ASIs,
- Execution of ASIs
- User information on its requested ASIs and their status,
- User feedback on ASI performances w.r.t. user requested performance,
- Measurement of resources consumption for an ASIs,
- Aggregation thereof to all running ASIs,
- Aggregation with the background traffic,
- Storage of the 3 abovementioned in the database,
- Possible exposure thereof to network users.

The methods previously described have the following advantages:
- Intents not only support connectivity services but also OTT applications such as video (eMBB) and IoT slices.
- The resources considered for Intents relate to both the network (BW) and the Cloud (CPU, Memory)
- The IBAS covers multiple network technologies: fixed and wireless.
- It provides services to "network users" that can be both network operators as in related art and also OTT providers.
- Thus, the Intent-Based application slice set-up proposed in this invention opens network programmability to non-technical OTT customers.

Among the different steps of the above-described methods, some will be more precisely described within the following sections.

The processing of the description of the intent needed by the application is achieved by automated analysis of request keywords or keyfields and their mapping in a required sequence of cloud and network execution. In an embodiment and to speed up the expression of the intent and facilitate its analysis, consists in using a RESTful interface offering a choice or a format for each keyfield is used. A RESTful interface to a system enables to send requests to it via standard HTTP (Hyper Text Transfer Protocol) commands and thus there is no need to use or write a particular protocol to place requests. An additional advantage is that a RESTful interface supports a well-specified set of request types and associated parameters that are exposed for instance directly on a graphical interface or upon user request. This way, network users can know what they can request and place a request in a simple way. In other embodiments, we can expose the format and choice in the form of a "IBN_Request" graphical user interface. In other embodiments, Service keyfields describe the type of application slice and are mapped in a database to sequences of cloud execution typically combining identification of involved virtual functions, call to orchestration and connectivity set-up, for examples are the name of the requested service, start time and duration, applicable geographical region, quality class.

Some parts of the method, so-called Intent Calendaring, enable users to schedule their intents to run for a specified time slot. To enable scheduling the execution of the Intent, which is not possible with current orchestration, the method has a framework for enabling cross scheduling between physical resources and frequency resources in terms of time and service. This calendaring is capable of providing the knowledge of available resources even in future time and thus is able to accept or reject the incoming request for a service. This kind of calendaring can increase multiplexing gain and optimal use of resources while fulfilling the Service Level Agreement (SLA).

In an embodiment, the method is configured to stop or cancel the execution of a slicing intent.

In an embodiment, this method is configured to be realized via a graphical interface so-called Intent Based Request interface (IF). This graphical interface also provides reliability by checking formal resources availability before ever calling any orchestrator or network controller. However, in order to execute the validated intent, the IBAS subsequently interfaces with the target cloud platform having required performance capabilities such as realtime in order to check actual resources availability. The resources checked must include network resources (BW, radio, ..) and cloud resources: at least CPU, memory.

The IBAS interface also performs a pro-active resources availability check and realizes the following tasks:
- It maintains a list of running services, with their start date and duration, in some "History" information base,
- Using an internal model, it estimates the resources requested for a service.
- The IBAS implements a management policy to reserve a given amount of network and cloud resources for the "system operation",
- It measures the cumulated cloud (CPU, memory) and network (BW) resources consumption of all the running ASIs,
- It may use it as instant information "IBN-ClusterInfo" or cumulate it over time in some "Dashboard" and store this in a database.
- If it knows the actual global network bandwidth consumption and its trends, it is able to predict for incoming requests whether the resources and capabilities are available. Otherwise, it may use bandwidth consumption patterns.
- As for latency performances, the IBAS may preferably perform traffic probes in order to report whether the system supports the latency constraints associated with a request.

This graphical interface is also in charge of presenting information contained in the "History", "IBN-ClusterInfo" and "Dashboard" information bases to OTT users, depending on their access rights and interests. In some embodiment, the method of the present subject matter uses this information to motivate an Intent rejection in an abstracted form so as to protect network management confidentiality.

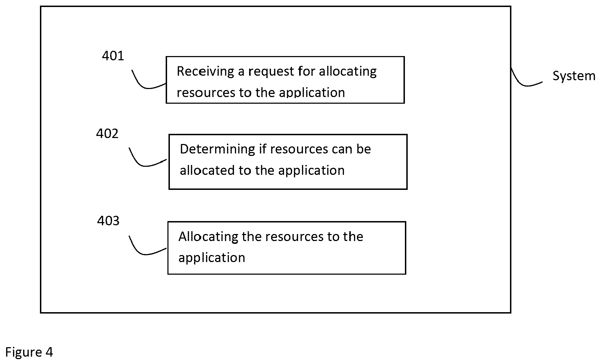

In an embodiment, a system to allocate resources to at least one application is described (see figure 4). This system is configured to realize the above-presented methods. This application is constituted of a set of functions and connection means allowing communication between the functions. These resources are constituted of computing resources and communication resources. The computing resources are used by the functions and the communication resources are used by the connection means. The system comprises:
- a module 401 configured to receive a request for allocating resources to the application, the request comprising a requested time slot for these resources and
- a module 402 configured to determine if resources can be allocated to the application during the requested time slot and
- a module 403 configured to allocate, if resources are available, during the requested time slot, computing resources to the functions, and communication resources to the connection means.

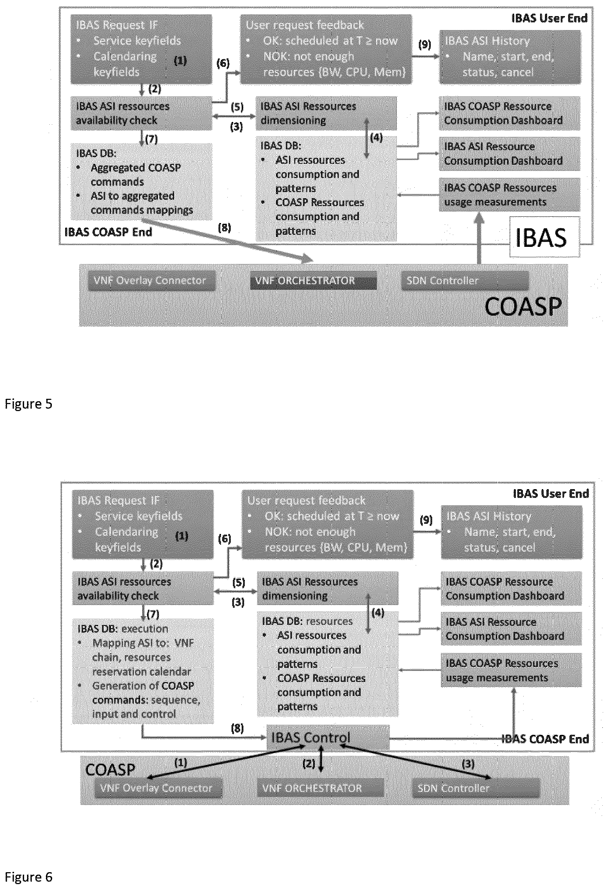

The figure 5 and 6 present two other embodiments of the system configured to realize the above-presented methods. In other words, this figure details the building blocks of an Intent Based Application Slicing (IBAS) deployed over a Cloud OTT Application Slicing Platform (COASP).

The system starts by using the expression of an intent. To this end, The IBAS Request the graphical interface module assists the network user to express an ASI. For example, it can expose "Service keyfields » and «Calendaring keyfields". After that the IBAS ASI resources availability check module calls the following modules:
- The IBAS ASI Resources dimensioning module: performs the resources consumption estimation for the requested ASI. It contacts the IBAS DB storing the ASI resources consumption and related patterns. Bandwidth dimensioning depends on specific application requirements. This DB gets information from the IBAS COASP Resources usage measurements module that gets this information from the COASP providing online orchestrator information on CPU and memory, and Controller information on Bandwidth.
- The resources availability is evaluated by comparing the overall COASP available resources and the slice "dimension" in terms of needed resources.
- The IBAS database stores Aggregated COASP commands and ASI to aggregated commands mappings. It is used to automatically generate the Cloud commands sequences that end up calling the top-level functions of the COASP (at least VNF overlay Builder, orchestrator and SDN Controller)
- The User request feedback module provides the user front end level feedback expressing whether the IBAS accepts to deploy the requested ASI or not.
   o An ASI is accepted if at least all the requested resources are available
   o It is rejected whenever one at least of the 3 resources criteria does not meet feasibility.
- The IBAS ASI History module at the user front end exposes the list of running ASIs with their name, start, end and status. **Error! Reference source not found.** This module allows the user to interrupt or cancel an ASI. The command "cancel" stops an already running ASI and cancels it if it is scheduled for a future date.

The system also comprises a IBAS request module. This module allows the setting of key fields specifying attributes of an ASI, in particular:
- Name of the requested service: mandatory
- Start time: default is at request date
- Duration: default is configured by IBAS
- Applicable geographical region: by default, the topology applicable to the network user
- Service quality class: default is best effort or standard format or all

The system can also comprise modules dedicated to providing network usage information to the end user. Among these modules we can have:
- The IBAS COASP Resources usage measurements module. This module monitors and displays the usage of cloud and network resources used to run a slice:
   o Cloud resources are typically: CPU and Memory
   o Network resources are typically: link bandwidth or radio resources

The IBAS may choose whether or not to display consumed and/or available resources to the "network user'".
- The IBAS COASP Resource Consumption Dashboard displays periodic COASP resources consumption cumulated over time.
- The IBAS ASI Resource Consumption Dashboard provides this information for 1 to all running ASIs. Resources consumption may also be displayed instantaneously.

In an embodiment, the system can be implemented for real-time 5G cloud service provisioning. In this embodiment, the COASP runs on a Cloud Radio Access Network (RAN). The IBAS system exposes a non-technical "natural language" interface to 5G network programming achieving real-time latencies and throughputs. The user enters a slice intent request via a graphical interface. IBAS checks intent formal feasibility, checks cloud resources availability, setup the slice according to the intent calendaring. The slice is implemented using microservice paradigm for supporting 5G real-time performance. The slice elements and related data traffic can be visualized on a video display or another display window.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all the steps of the described method. The program storage devices may be, for example, digital memories, magnetic storage media, such as magnetic disks and magnetic tapes, hard drives, or optically readable digital data storage media.

Another embodiment of the present subject matter is a computer-readable medium having embodied thereon a computer program configured to realize the method, presented figure 1, to allocate resources to at least one application. This application is constituted of a set of functions and connection means allowing communication between the functions. These resources are constituted of computing resources and communication resources. The computing resources are used by the functions and the communication resources are used by the connection means, the method comprises:
- a step 101 of receiving a request for allocating resources to the application, the request comprising a requested time slot for these resources,
- a step 102 of determining if resources can be allocated to the application during the requested time slot,
- a step 103, executed if resources are available, of allocating, during the requested time slot, computing resources to the functions, and communication resources to the connection means.

## Claims

1. Method to allocate resources to at least one application, this application being constituted of a set of functions and connection means allowing communication between the functions, these resources being constituted of computing resources and communication resources, the computing resources being used by the functions and the communication resources being the connection means, the method comprising:
• a step (101) of receiving a request for allocating resources to the application, the request comprising a requested time slot for these resources and
• a step (102) of determining if resources can be allocated to the application during the requested time slot and
• a step (103), executed if resources are available, of allocating, during the requested time slot, computing resources to the functions, and communication resources to the connection means.

2. Method according to the claim 1 also comprising the following step:
• a step (201) of deploying the functions and the connection means used for the communication of the functions, based on the allocated computing and communication resources,
• a step (202) of executing the application, during the requested time slot and
• a step (203) of stopping the functions and releasing the allocated computing and communication resources once the requested time slot is elapsed.

3. Method according to the claim 1 or 2 wherein the computing resources comprises, cpu resources, memory resources and network resources comprises at least one network link dedicated to the communication needs of the application.

4. Method according to the claim 1 or 2 or 3 wherein the request also comprises at least one of:
• name of the requested service,
• start time,
• duration,
• applicable geographical region,
• quality class.

5. Method according to any of the previous claims wherein the request for allocating resources to the application is received from a user and wherein the method also comprises, after the step (102) of determining if resources can be allocated, a step (301) of sending back to the user a response on the feasibility of the allocation of resources to the application.

6. System, to allocate resources to at least one application, this application being constituted of a set of functions and connection means allowing communication between the functions, these resources being constituted of computing resources and communication resources, the computing resources being used by the functions and the communication resources being used by the connection means, the system comprising:
• a module (401) configured to receive a request for allocating resources to the application, the request comprising a requested time slot for these resources and
• a module (402) configured to determine if resources can be allocated to the application during the requested time slot and
• a module (403) configured to allocate, if resources are available, during the requested time slot, computing resources to the functions, and communication resources to the connection means.

7. Computer-readable medium having embodied thereon a computer program configured to realize a method to allocate resources to at least one application, this application being constituted of a set of functions and connection means allowing communication between the functions, these resources being constituted of computing resources and communication resources, the c computing resources being used by the functions and the communication resources being used by the connection means, the method comprising:
• a step (101) of receiving a request for allocating resources to the application, the request comprising a requested time slot for these resources,
• a step (102) of determining if resources can be allocated to the application during the requested time slot,
• a step (103), executed if resources are available, of allocating, during the requested time slot, computing resources to the functions, and communication resources to the connection means.

## Amended claims

### Amended claims in accordance with Rule 137(2) EPC.

1. Method to allocate resources to at least one application, this application being constituted of a set of functions and connection means allowing communication between the functions, these resources being constituted of computing resources and communication resources, the computing resources being used by the functions and the communication resources being the connection means, the method comprising:
• a step (101) of receiving a request for allocating resources to the application, the request comprising a requested time slot for these resources and
• a step (102) of determining if resources can be allocated to the application during the requested time slot and
• a step (103), executed if resources are available, of allocating, during the requested time slot, computing resources to the functions, and communication resources to the connection means.

2. Method according to the claim 1 also comprising the following step:
• a step (201) of deploying the functions and the connection means used for the communication of the functions, based on the allocated computing and communication resources,
• a step (202) of executing the application, during the requested time slot and
• a step (203) of stopping the functions and releasing the allocated computing and communication resources once the requested time slot is elapsed.

3. Method according to the claim 1 or 2 wherein the computing resources comprise, cpu resources, memory resources and wherein the communication resources comprise at least one network link dedicated to the communication needs of the application.

4. Method according to the claim 1 or 2 or 3 wherein the request also comprises at least one of:
• name of the requested service,
• start time,
• duration,
• applicable geographical region,
• quality class.

5. Method according to any of the previous claims wherein the request for allocating resources to the application is received from a user and wherein the method also comprises, after the step (102) of determining if resources can be allocated, a step (301) of sending back to the user a response on the feasibility of the allocation of resources to the application.

6. System, to allocate resources to at least one application, this application being constituted of a set of functions and connection means allowing communication between the functions, these resources being constituted of computing resources and communication resources, the computing resources being used by the functions and the communication resources being used by the connection means, the system comprising:
• a module (401) configured to receive a request for allocating resources to the application, the request comprising a requested time slot for these resources and
• a module (402) configured to determine if resources can be allocated to the application during the requested time slot and
• a module (403) configured to allocate, if resources are available, during the requested time slot, computing resources to the functions, and communication resources to the connection means.

7. Computer-readable medium having embodied thereon a computer program configured to realize a method to allocate resources to at least one application, this application being constituted of a set of functions and connection means allowing communication between the functions, these resources being constituted of computing resources and communication resources, the c computing resources being used by the functions and the communication resources being used by the connection means, the method comprising:
• a step (101) of receiving a request for allocating resources to the application, the request comprising a requested time slot for these resources,
• a step (102) of determining if resources can be allocated to the application during the requested time slot,
• a step (103), executed if resources are available, of allocating, during the requested time slot, computing resources to the functions, and communication resources to the connection means.
